# EUROPEAN PATENT SPECIFICATION

(11) **EP 4 460 958 B1**
(45) Date of publication and mention of the grant of the patent: **05.11.2025**
(21) Application number: 22835798.4
(22) Date of filing: 15.12.2022
(51) Int. Cl.: H04L 67/55, H04L 67/303

(54) **ADD SUBSCRIPTION CONTEXT TO THE DEFINITION OF TYPE NOTIFICATION DATA**
HINZUFÜGEN VON ABONNEMENTKONTEXT ZU DER DEFINITION VON TYPBENACHRICHTIGUNGSDATEN
APPORT DE CONTEXTE D'ABONNEMENT À LA DÉFINITION DE DONNÉES DE NOTIFICATION DE TYPE

(30) Priority: 07.01.2022 WO PCT/CN2022/070691
(43) Date of publication of application: 13.11.2024
(73) Proprietor: Telefonaktiebolaget LM Ericsson (publ), 164 83 Stockholm (SE)
(72) Inventor: DE GREGORIO RODRIGUEZ, Jesus Angel, 28660 Madrid (ES); LI, Songmao, Shanghai, 200335 (CN); ZHANG, Xinyu, Shanghai, 200335 (CN); ZHANG, Xiaowei, Shanghai, 200335 (CN); WAN, Dawei, Shanghai, 200335 (CN)
(74) Representative: Ericsson
(86) International application number: PCT/EP2022/086179
(87) International publication number: WO 2023/131495

(56) References cited:
- ERICSSON: "Pseudo-CR on Subscription to NF Profile changes", vol. CT WG4, no. Gothenburg, SWEDEN; 20180122 - 20180126, 29 January 2018 (2018-01-29), XP051384187, Retrieved from the Internet <URL:http://www.3gpp.org/ftp/tsg%5Fct/WG4%5Fprotocollars%5Fex%2DCN4/TSGCT4%5F82%5FGothenburg/Docs/> [retrieved on 20180129]

## Description

### Technical Field

The embodiments herein relate generally to the field of mobile communication, and more particularly, the embodiments herein relate to adding subscription context to the definition of type notification data.

### Background

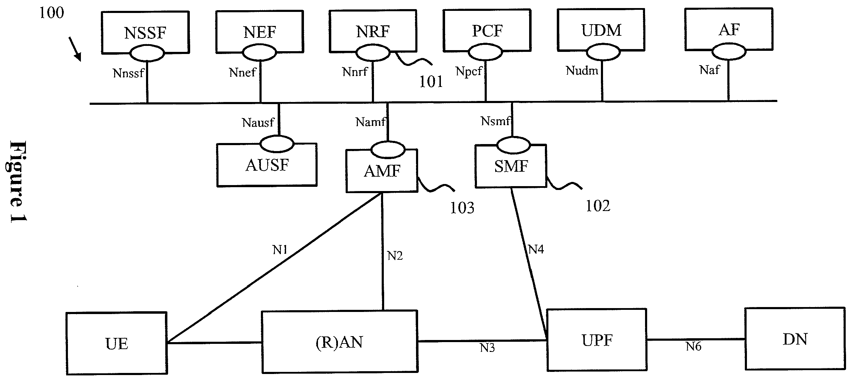

Figure 1 is a schematic block diagram showing example architecture 100 for 5G network architecture at non-roaming scenario. In the 5G core network, the service-based architecture describes several interaction patterns, such as request/response pattern, or subscribe/notify pattern.

The subscribe/notify pattern assumes that a Network Function (NF) service consumer issues a first request (i.e., the "subscribe" operation) towards an NF service producer. Then, when certain conditions occur at the NF service producer, it issues a subsequent request (i.e., the "notify" operation) towards the NF service consumer. Document ERICSSON: "Pseudo-CR on Subscription to NF Profile changes",,vol. CT WG4, no. Gothenburg, SWEDEN; 20180122 - 20180126 29 January 2018 (2018-01-29), XP051384187 discloses the possibility to subscribe to changes of the NF profile of an existing NF Instance.

### Summary

The embodiments herein propose methods, network functions, computer readable mediums and computer program products for adding subscription context to the definition of type notification data.

In some embodiments, there proposes a method performed by a first network function implementing a Network Repository Function (NRF). In an embodiment, the method may comprise the step of receiving one or more subscription requests for subscribing one or more events associated with a third network function, from a second network function. Each of the subscription request may include a first parameter indicating a subscription condition and a second parameter indicating a common callback Uniform Resource Identifier (URI). The method may further comprise the step of transmitting a notification request for notifying the one or more events to the second network function according to the common callback URI. The notification request may include a third parameter indicating a subscription context regarding the subscription request. The subscription context relates to a created subscription.

In an embodiment, the step of receiving the one or more subscription requests for subscribing the one or more events may further comprise a step of receiving a first subscription request including the first parameter indicating a first subscription condition and the second parameter indicating the common callback URI.

In an embodiment, the step of receiving the one or more subscription requests for subscribing the one or more events may further comprise a step of receiving a second subscription request including the first parameter indicating a second subscription condition and the second parameter indicating the common callback URI.

In an embodiment, the method may further comprise the step of creating a first subscription according to the first subscription request, which in turn may further comprise the step of assigning a first subscription ID for the first subscription.

In an embodiment, the method may further comprise the step of creating a second subscription according to the second subscription request, which in turn may further comprise the step of assigning a second subscription ID for the second subscription.

In some embodiments, there proposes a method performed by a second network function. In an embodiment, the method may comprise the step of transmitting one or more subscription requests for subscribing one or more events associated with a third network function, to a first network function implementing a NRF. Each of the subscription request may include a first parameter indicating a subscription condition and a second parameter indicating a common callback URI. The method may further comprise the step of receiving a notification request for notifying the one or more events from the first network function. The notification request may be transmitted according to the common callback URI and may include a third parameter indicating a subscription context regarding the subscription request. The subscription context relates to a created subscription.

In an embodiment, the step of transmitting the one or more subscription request for subscribing the one or more events may further comprise the step of transmitting a first subscription request including the first parameter indicating a first subscription condition and the second parameter indicating the common callback URI.In an embodiment, the step of transmitting the one or more subscription requests for subscribing the one or more events may further comprise the step of transmitting a second subscription request including the first parameter indicating a second subscription condition and the second parameter indicating the common callback URI.

In an embodiment, the method may further comprise the step of receiving a first subscription response from the first network function. The first subscription response may include a first subscription ID of a first subscription. The first subscription may be created in the first network function according to the first subscription request.

In an embodiment, the method may further comprise the step of receiving a second subscription response from the first network function. The second subscription response may include a second subscription ID of a second subscription. The second subscription may be created in the first network function according to the second subscription request.

In an embodiment, the subscription context may include at least one of the first subscription ID and the first subscription condition or at least one of the second subscription ID and the second subscription condition, depending on which of the first or second subscription condition occurs.

In some embodiments, there proposes a network function. In an embodiment, the network function may comprise at least one processor; and a non-transitory computer readable medium coupled to the at least one processor. The non-transitory computer readable medium may store instructions executable by the at least one processor, whereby the at least one processor may be configured to perform any of the above methods. In an embodiment, the network function may be configured as the first network function or the second network function.

In some embodiments, there proposes a computer readable medium comprising computer readable code, which when run on an apparatus, may cause the apparatus to perform any of the above methods.

In some embodiments, there proposes a computer program product comprising computer readable code, which when run on an apparatus, may cause the apparatus to perform any of the above methods.

With the embodiments herein, the subscription context is introduced into the notification payload, thus allows the subscribing NF to have more information to facilitate the notification handling. Therefore, the embodiments herein may improve and simplify the notification implementation, and do not require the subscribing NF to support distinct callback URI.

### Brief Description of the Drawings

The accompanying drawings, which are incorporated herein and form part of the specification, illustrate various embodiments of the present disclosure and, together with the description, further serve to explain the principles of the disclosure and to enable a person skilled in the pertinent art to make and use the embodiments disclosed herein. In the drawings, like reference numbers indicate identical or functionally similar elements, and in which:
Figure 1 is a schematic block diagram showing example architecture for 5G network architecture at non-roaming scenario;
Figure 2 is a schematic signaling chart showing the messages in an example subscription procedure, according to the embodiments herein;
Figure 3 is a schematic signaling chart showing the messages in an example notification procedure, according to the embodiments herein;
Figure 4 is a schematic flow chart showing an example method in the first network function, according to the embodiments herein;
Figure 5 is a schematic flow chart showing an example method in the second network function, according to the embodiments herein;
Figure 6 is a schematic block diagram showing an example first network function, according to the embodiments herein;
Figure 7 is a schematic block diagram showing an example second network function, according to the embodiments herein;
Figure 8 is a schematic block diagram showing an example computer-implemented apparatus, according to the embodiments herein.

### Detailed Description of Embodiments

Embodiments herein will be described in detail hereinafter with reference to the accompanying drawings, in which embodiments are shown. These embodiments herein may, however, be embodied in many different forms and should not be construed as being limited to the embodiments set forth herein. The elements of the drawings are not necessarily to scale relative to each other.

Reference to "one embodiment" or "an embodiment" means that a particular feature, structure or characteristic described in connection with the embodiment is included in at least one embodiment. Thus, the appearances of the phrase "in an embodiment" appearing in various places throughout the specification are not necessarily all referring to the same embodiment.

The term "A, B, or C" used herein means "A" or "B" or "C"; the term "A, B, and C" used herein means "A" and "B" and "C"; the term "A, B, and/or C" used herein means "A" , "B", "C", "A and B" , "A and C", "B and C" or "A, B, and C".

It should also be understood that, a network node (such as the NRF 101, the Session Management Function (SMF) 102, and the Access and Mobility Management Function (AMF) 103 in Figure 1), which also may be referred as a network function, can be implemented either as a network element on a dedicated hardware, as a software instance running on a dedicated hardware, or as a virtualized function instantiated on an appropriate platform, e.g. on a cloud infrastructure.

In an embodiment, the communication system 100 may be configured in an Over The Top (OTT) scenario. The OTT connection may be transparent in the sense that the participating communication devices through which the OTT connection passes are unaware of routing of uplink and downlink communications. For example, a base station may not or need not be informed about the past routing of an incoming downlink communication with data originating from the network functions (such as the NRF 101, the SMF 102, and the AMF 103) in the core network to be forwarded (e.g., handed over) to a connected User Equipment (UE). Similarly, the base station need not be aware of the future routing of an outgoing uplink communication originating from the UE towards the network functions (such as the NRF 101, the SMF 102, and the AMF 103) in the core network.

According to 3rd Generation Partnership Project (3GPP) Technical Specification (TS) 29.500 (the 3GPP Technical Specification describing the general mechanism in the 5G service based architecture), the NF service consumer may provide a "callback URI", which may include a "notification correlation ID", during the "subscribe" operation.

In addition, as described in 3GPP TS 23.501, the subscribe-notify interaction requires the NF service consumer to provide a "notification endpoint" and an optional "notification correlation ID"; those are also called "callback URI" in the context of the 3GPP Technical Specification, and the authority of the "callback URI" is the Hyper Text Transfer Protocol (HTTP) endpoint where the notifications shall be delivered by the NF service producer.

It should be noted that, in the design of multiple Application Programming Interfaces (APIs) in the 5G core network, it is assumed that said callback URI may be either unique for each subscription that the consumer creates in the producer, or a common URI used by the consumer to receive, from the producer, all notifications corresponding to multiple subscriptions. This is typically a decision left to the implementation of each NF service consumer.

When the NF service consumer subscribes the same event with multiple subscriptions having different conditions via the same common callback URI, the NF service producer may notify the event corresponding to the multiple subscriptions according to the common callback URI. Although the use of the common callback URI, instead of distinct callback URI, may simplify the notification, the NF service consumer may not know which of the subscriptions is triggered in the NF service producer. Thus, the NF service consumer may need to know more information to handle the notification correctly.

In view of deficiencies, the embodiments herein propose introducing "subscription context" into the notification payload. Here, the term "subscription context" may refer to the information about the subscription, which may include, but not be limited to, at least one of the information about the subscription request transmitted from the subscribing NF to the NRF, the information about the subscription created and stored in the NRF, and the information about the subscription response transmitted from the NRF to the subscribing NF. As an example, the subscription context may contain the subscription ID, the subscription conditions, or other data. Thus, the embodiments herein may allow the subscribing NF to have more information about the subscription context to facilitate the notification handling. Therefore, the embodiments herein may improve and simplify the notification implementation, which does not require the subscribing NF to support distinct callback URI.

The following procedures illustrate how does subscription context is conveyed during subscription-notify procedure between a network function and the NRF.

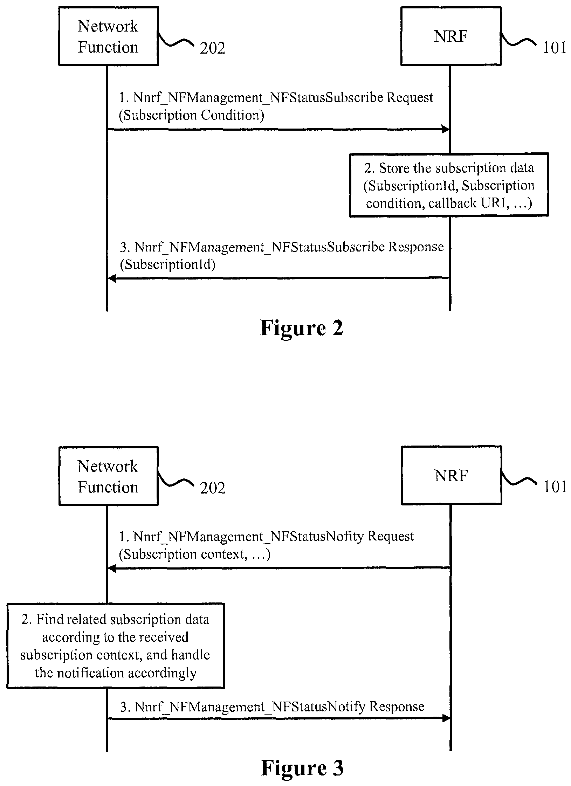

Figure 2 is a schematic signaling chart showing the messages in an example subscription procedure, according to the embodiments herein. As an example, the subscription procedure may include the subscription of the NF profile change.

In an embodiment, the subscription procedure may include the following messages or steps:
Step 1. The network function 202 may subscribe the NF profile change with subscription data (e.g., subscription condition, a common callback URI, and other data), with a subscription request (for example, the shown Nnrf_NFManagement _NFStatusSubscribe Request message).

Here, to facilitate the understanding of the embodiments, the subscription-notify procedure is described with a detailed example, i.e., the subscription of the NF profile change. Note that, the embodiments may be applicable for all subscription-notify procedure between a network function and the NRF, and are not limited to the subscription/notification of the NF profile change.

For the NRF "NF Management" API in 3GPP TS 29.510, there is a scenario where a NF service consumer subscribes to the NRF (as NF service producer for the NF Management service), to be notified when the NF profile of a given NF Instance has changed. A particular case of this subscribe operation, is then the consumer subscribes to a set of NF Instances (represented by their "NF Set ID"), so the NRF is expected to send a notification when certain NF Instances start or stop being part of such set (i.e., the certain NF Instances is added into or removed from the NF set).

As an example, the NF profile may include the following parameter in the following table 1.

**Table 1: Definition of type NF Profile**

| | | | | |
|---|---|---|---|---|
| nfSetIdList | array(NfSetId) | C | 1..N | NF Set ID defined in clause 28.12 of 3GPP TS 23.003 [12]. |
| | | | | At most one NF Set ID shall be indicated per PLMN of the NF. |
| | | | | This information shall be present if available. |

For example, the AMF 102 may support the Event Exposure service to other service consumer such as SMF 102. Here, for the Event Exposure service, the SMF 102 may be the NF service consumer and the AMF 103 may be the NF service producer. The AMF 103 may belong to one or more NF sets; each set has a NF Set ID. The AMFs in the same set may provide as alternative for each other.

The SMF 102 may want to know the status of the AMF 103, for example whether the AMF 103 is added into or removed from a specific NF set. Then, the SMF 102 may query the NF profile of the AMF 103 to the NRF 101, with a subscription-notification procedure. Here, for the NF profile query service (an example of NF Management service), the SMF 102 may be the NF service consumer and the NRF 101 may be the NF service producer.

Here, in case that the NF service producer instance (e.g., the AMF 103) belongs to more than one NF set, the NF service consumer (e.g., the SMF 102) may subscribe profile change event from the NRF 101 for each NF Set, and a common callback URI may be provided in all subscriptions.

In an example, the subscription data transmitted in the subscription request in the step 1 may include the subscription condition, a common callback URI, and other data.

As an example, the subscription data may include the following parameter in the following table 2.

**Table 2: Definition of type NF Subscription Data**

| **Attribute name** | **Data type** | **P** | **Cardinality** | **Description** |
|---|---|---|---|---|
| nfStatusNotificationUri | Uri | M | 1 | Callback URI where the NF Service Consumer will receive the notifications from NRF. |
| reqNfInstanceId | NfInstanceId | O | 0..1 | If present, this IE shall contain the NF instance id of the NF service consumer. |
| subscrCond | SubscrCond | O | 0..1 | If present, this attributed shall contain the conditions identifying the set of NF Instances whose status is requested to be monitored. If this attribute is not present, it means that the NF Service Consumer requests a subscription to all NFs in the NRF (NOTE 1). |
| subscriptionId | string | C | 0..1 | Subscription ID for the newly created resource. This parameter shall be absent in the request to the NRF and shall be included by NRF in the response to the subscription creation request. |
| | | | | Read-Only: true |
| | | | | Pattern: "^([0-9]{5,6}-)?[^-]+$" |

Here, for each NF set, the network function 202 (e.g., the SMF 102) may send multiple different subscription requests. For example, for the first NF set, the network function 202 may transmit a first subscription request to the NRF 101, and the first subscription request may include a first subscription condition (for example, the SMF 102 is added or removed from a first NF set) and a common callback URI. Then, for the second NF set, the network function 202 may transmit a second subscription request to the NRF 101, and the second subscription request may include a second subscription condition (for example, the SMF 102 is added or removed from a second NF set) and the common callback URI.

In an embodiment, the common callback URI may include a notification endpoint of the network function 202 and an optional notification correlation ID.

Step 2. The NRF 101 may store the subscription data.

Upon reception of the subscription request from the network function 202, the NRF 101 may create a subscription by assigning respective subscription ID. For example, upon reception of the first subscription request, the NRF 101 may assign a first subscription ID for the first subscription request; and upon reception of the second subscription request, the NRF 101 may assign a second subscription ID for the second subscription request.

Then, the NRF 101 may store the subscription ID, the subscription condition and the callback URI for each subscription request. For example, for the first subscription request, the NRF 101 may store the first subscription ID, the first subscription condition and the common callback URI; and for the second subscription request, the NRF 101 may store the second subscription ID, the second subscription condition and the common callback URI.

Step 3. The NRF 101 may send a response with the created subscription data (e.g., subscription Id) with a subscription response (for example, the shown Nnrf_NFManagement_NFStatusSubscribe response message).

The NRF 101 may send a response with the created subscription ID to show the success of the subscription request. For example, for the first subscription request, the NRF 101 may transmit the first subscription ID to the network function 202; and for the second subscription request, the NRF 101 may transmit the second subscription ID to the network function 202.

Figure 3 is a schematic signaling chart showing the messages in an example notification procedure, according to the embodiments herein. As an example, the notification procedure may include the notification of the NF profile change.

In an embodiment, the notification procedure may include the following messages or steps:
Step 1. The NRF 101 may send a NF Status Notify request including the related subscription context to the subscribed network function 202, with a notification request (for example, the shown Nnrf_NFManagement_NFStatusNotify request message).

In response to the subscription condition occurs (for example, the NF service producer such as the AMF 103 updates the NF profile), the NRF 101 triggers the respective notification to the network function 202, according to the common callback URI.

For example, if the first subscription condition occurs, e.g., the AMF 103 is added into or removed from the first NF set, the NRF 101 may transmit a first notification request to the network function 202 according to the common callback URI. The first notification request may include the subscription context of the first subscription request.

Otherwise, if the second subscription condition occurs, e.g., the AMF 103 is added into or removed from the second NF set, the NRF 101 may transmit a second notification request to the network function 202 according to the common callback URI. The second notification request may include the subscription context of the second subscription request.

As an example, the notification request may include the following parameter in the following table 3.

**Table 3: Definition of type Notification Data**

| **Attribute name** | **Data type** | **P** | **Cardinality** | **Description** |
|---|---|---|---|---|
| subscriptionContext | SubscriptionContext | C | 0..1 | It contains the subscription condition (subscrCond) and subscription Id (subscriptionld), and maybe some other subscription-related data. |

Note that, for simplicity, other attributes in the notification data are not shown. Besides, the attribute name "subscription Context" is just an example.

As an example, the subscription context may include the following parameter in the following table 4.

**Table 4: Definition of type SubscriptionContext**

| **Attribute name** | **Data type** | **P** | **Cardinality** | **Description** |
|---|---|---|---|---|
| subscriptionId | String | C | 0..1 | Subscription Id of the subscription that originated the notification message from NRF. |
| subscrCond | SubscrCond | C | 0..1 | Subscription Conditions of the subscription that originated the notification message from NRF. |

Note that, the subscription context may include at least one of the subscription ID and the subscription condition. For example, the subscription context may include the subscription ID without including the subscription condition; or the subscription context may include the subscription condition without including the subscription ID; or the subscription context may include both the subscription ID and the subscription condition.

In contrast, currently, the 3GPP TS 29.510 indicates: when a change in an NFProfile results in an NF to stop being part of a given set, the NRF shall indicate such condition by including the "conditionEvent" attribute with value "NF_REMOVED", and both attributes "nfProfile" and "profileChanges" shall be absent. Besides, according to 3GPP TS 29.510, when one NF supports multiple Public Land Mobile Network (PLMN) ID, it is possible that NF instance belongs to multiple NF Set IDs.

Therefore, currently, when the subscribed NF Service Producer instance is removed from one NF Set but remains in the rest NF Sets, the NRF will send a notification towards the subscribed NF Service Consumer via the common callback URI, which includes a "conditionEvent" attribute with value "NF _REMOVED". But there is no information for NF Service Consumer to know whether the subscribed NF Service Producer instance is removed from which NF Set.

By comparing with the current technical specification, the embodiments introduce an optional "subscription context" attribute into definition of type notification data, which allows the subscribing NF to have more information about the subscription context to facilitate the notification handling.

Step 2. The network function 202 may find the related subscription data according to the received subscription context (e.g., subscription Id or subscription condition), and handle the notification data accordingly.

For example, if the network function 202 received the notification request from the NRF 101 with the subscription context of the subscription request, for example the subscription Id or subscription condition of the subscription request. The network function 202 may know that whether the first subscription condition or the second subscription condition occurs, e.g., whether the AMF 103 is added into or removed from the first NF set or the second NF set. Then, the network function 202 may handle notification data accordingly.

Step 3. The network function 202 may send a NF Status Notify response, with a notification response (for example, the shown Nnrf_NFManagement_NFStatusNotify response message).

With the embodiments herein, the subscription context is introduced into the notification payload, thus allows the subscribing NF to have more information to facilitate the notification handling. Therefore, the embodiments herein may improve and simplify the notification implementation, and do not require the subscribing NF to support distinct callback URI.

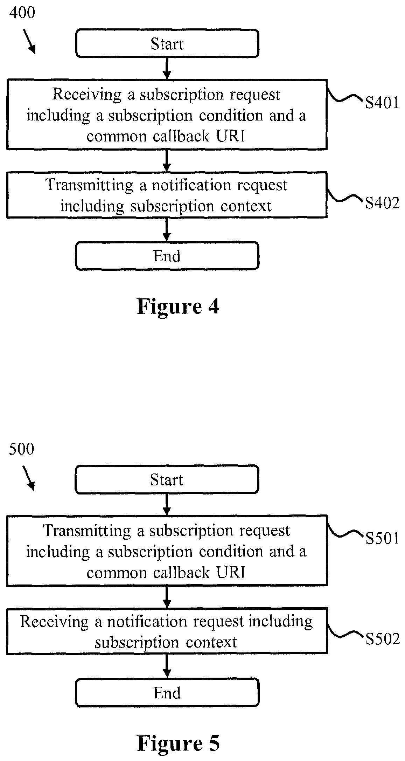

The embodiments of this disclosure will be further explained by referring to the flow charts of for example Figure 4 and Figure 5. Figure 4 is a schematic flow chart showing an example method 400 in the first network function, according to the embodiments herein.

The method 400 may begin with step S401, in which the first network function (for example the NRF 101) may receive one or more subscription requests for subscribing one or more events associated with a third network function (103), from a second network function (for example the SMF 102 or the network function 202). Each of the subscription request may include a first parameter indicating a subscription condition and a second parameter indicating a common callback URI.

In an embodiment, the common callback URI may include a notification endpoint of the second network function and an optional notification correlation ID, i.e., the notification correlation ID is selectively included in the common callback URI.

In an embodiment, the subscribed event may be a network function profile change of a third network function (for example the AMF 103). In an embodiment, the subscription condition may include that the third network function is added into or removed from a network function set.

In an embodiment, the second network function and the third network function may be a service consumer and a service producer respectively for a specific service, for example Event Exposure service.

In an embodiment, in the step S401, the first network function may receive a first subscription request and a second subscription request. The first subscription request may include the first parameter indicating a first subscription condition and the second parameter indicating the common callback URI, and the second subscription request may include the first parameter indicating a second subscription condition and the second parameter indicating the common callback URI.

In an embodiment, the third network function may belong to one or more network function sets. In an embodiment, the first subscription condition may be that the third network function is added into or removed from a first set of the one or more network function sets. In an embodiment, the second subscription condition may be that the third network function is added into or removed from a second set of the one or more network function sets.

Although not shown in Figure 4, in an embodiment, the first network function may create a first subscription according to the first subscription request, which in turn may further comprise the step of assigning a first subscription ID for the first subscription. In an embodiment, the first network function may create a second subscription according to the second subscription request, which in turn may further comprise the step of assigning a second subscription ID for the second subscription.

Then, the method 400 may proceed to step S402, in which the first network function may transmit a notification request for notifying the one or more events to the second network function according to the common callback URI. The notification request may include a third parameter indicating a subscription context regarding the subscription request. The subscription context relates to a created subscription.

In an embodiment, the subscription context may include at least one of the first subscription ID and the first subscription condition or at least one of the second subscription ID and the second subscription condition, depending on which of the first or second subscription condition occurs.

The above steps are only examples, and the first network function may perform any actions described with respect to Figures 2-3, to allow the subscribing NF to have more information to facilitate the notification handling.

Figure 5 is a schematic flow chart showing an example method 500 in the second network function, according to the embodiments herein.

The method 500 may begin with step S501, in which the second network function (for example the SMF 102 or the network function 202) may transmit one or more subscription requests for subscribing one or more events associated with a third network function (103), to a first network function (for example the NRF 101) implementing a NRF. Each of the subscription request may include a first parameter indicating a subscription condition and a second parameter indicating a common callback URI.

In an embodiment, the common callback URI may include a notification endpoint of the second network function and an optional notification correlation ID, i.e., the notification correlation ID is selectively included in the common callback URI.

In an embodiment, the subscribed event may be a network function profile change of a third network function (for example the AMF 103). In an embodiment, the subscription condition may include that the third network function is added into or removed from a network function set.

In an embodiment, the second network function and the third network function may be a service consumer and a service producer respectively for a specific service, for example Event Exposure service.

In an embodiment, in the step S501, the second network function may transmit a first subscription request and a second subscription request. The first subscription request may include the first parameter indicating a first subscription condition and the second parameter indicating the common callback URI, and the second subscription request may include the first parameter indicating a second subscription condition and the second parameter indicating the common callback URI.

In an embodiment, the third network function may belong to one or more network function sets. In an embodiment, the first subscription condition may be that the third network function is added into or removed from a first set of the one or more network function sets. In an embodiment, the second subscription condition may be that the third network function is added into or removed from a second set of the one or more network function sets.

Although not shown in Figure 5, in an embodiment, the second network function may receive a first subscription response from the first network function. The first subscription response may include a first subscription ID of a first subscription. The first subscription may be created in the first network function according to the first subscription request. In an embodiment, the second network function may receive a second subscription response from the first network function. The second subscription response may include a second subscription ID of a second subscription. The second subscription may be created in the first network function according to the second subscription request.

Then, the method 500 may proceed to step S502, in which the second network function may receive a notification request for notifying the one or more events from the first network function. The notification request may be transmitted according to the common callback URI and may include a third parameter indicating a subscription context regarding the subscription request. The subscription context relates to a created subscription.

In an embodiment, the subscription context may include at least one of the first subscription ID and the first subscription condition or at least one of the second subscription ID and the second subscription condition, depending on which of the first or second subscription condition occurs.

Although not shown in Figure 5, in an embodiment, the second network function may find the related subscription data within the subscription request according to the received subscription context. In an embodiment, the second network function may handle the notified data within the notification request accordingly.

The above steps are only examples, and the second network function may perform any actions described with respect to Figures 2-3, to allow the subscribing NF to have more information to facilitate the notification handling.

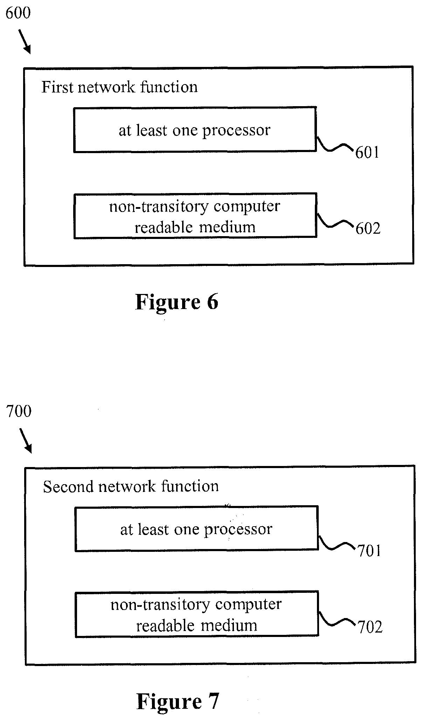

Figure 6 is a schematic block diagram showing an example first network function 600, which may be configured as the NRF 101, according to the embodiments herein.

In an embodiment, the first network function 600 may include at least one processor 601; and a non-transitory computer readable medium 602 coupled to the at least one processor 601. The non-transitory computer readable medium 602 may store instructions executable by the at least one processor 601, whereby the at least one processor 601 may be configured to perform the steps in the example method 400 as shown in the schematic flow chart of Figure 4; the details thereof are omitted here.

Note that, the first network function 600 may be implemented as hardware, software, firmware and any combination thereof. For example, the first network function 600 may include a plurality of units, circuities, modules or the like, each of which may be used to perform one or more steps of the example method 400 or one or more steps related to the NRF 101.

It should be understood that, the first network function 600 may be implemented either as a network element on a dedicated hardware, as a software instance running on a dedicated hardware, or as a virtualized function instantiated on an appropriate platform, e.g. on a cloud infrastructure.

Figure 7 is a schematic block diagram showing an example second network function 700, which may be configured as either the SMF 102 or the network function 202, according to the embodiments herein.

In an embodiment, the second network function 700 may include at least one processor 701; and a non-transitory computer readable medium 702 coupled to the at least one processor 701. The non-transitory computer readable medium 702 may store instructions executable by the at least one processor 701, whereby the at least one processor 701 may be configured to perform the steps in the example method 500 as shown in the schematic flow chart of Figure 5; the details thereof are omitted here.

Note that, the second network function 700 may be implemented as hardware, software, firmware and any combination thereof. For example, the second network function 700 may include a plurality of units, circuities, modules or the like, each of which may be used to perform one or more steps of the example method 500 or one or more steps related to the SMF 102 or the network function 202.

It should be understood that, the second network function 700 may be implemented either as a network element on a dedicated hardware, as a software instance running on a dedicated hardware, or as a virtualized function instantiated on an appropriate platform, e.g. on a cloud infrastructure.

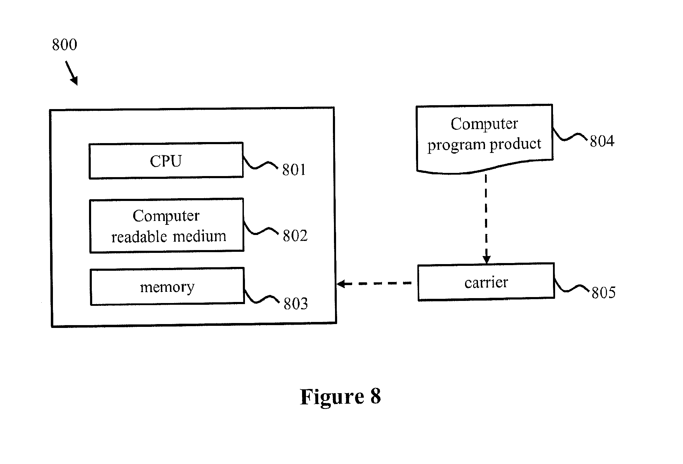

Figure 8 is a schematic block diagram showing an example computer-implemented apparatus 800, according to the embodiments herein. In an embodiment, the apparatus 800 may be configured as the above mentioned apparatus, such as the NRF 101, the SMF 102, the network function 202, or the network functions 600 and 700.

In an embodiment, the apparatus 800 may include but not limited to at least one processor such as Central Processing Unit (CPU) 801, a computer-readable medium 802, and a memory 803. The memory 803 may comprise a volatile (e.g., Random Access Memory, RAM) and/or non-volatile memory (e.g., a hard disk or flash memory). In an embodiment, the computer-readable medium 802 may be configured to store a computer program and/or instructions, which, when executed by the processor 801, causes the processor 801 to carry out any of the above mentioned methods.

In an embodiment, the computer-readable medium 802 (such as non-transitory computer readable medium) may be stored in the memory 803. In another embodiment, the computer program may be stored in a remote location for example computer program product 804 (also may be embodied as computer-readable medium), and accessible by the processor 801 via for example carrier 805.

The computer-readable medium 802 and/or the computer program product 804 may be distributed and/or stored on a removable computer-readable medium, e.g. diskette, CD (Compact Disk), DVD (Digital Video Disk), flash or similar removable memory media (e.g. compact flash, SD (secure digital), memory stick, mini SD card, MMC multimedia card, smart media), HD-DVD (High Definition DVD), or Blu-ray DVD, USB (Universal Serial Bus) based removable memory media, magnetic tape media, optical storage media, magneto-optical media, bubble memory, or distributed as a propagated signal via a network (e.g. Ethernet, ATM, ISDN, PSTN, X.25, Internet, Local Area Network (LAN), or similar networks capable of transporting data packets to the infrastructure node).

Furthermore, the following amendments are proposed to amend the current 3GPP Technical Specification 3GPP TS 29.510 V17.4.0.

### Title: Subscription Context in Notifications

### Reason for change:

When a subscribing entity of the NRF creates a subscription, it provides a callback URI, where the NRF will send notifications later.

A same subscribing entity may create several subscriptions (with various subscription conditions), and the specification does not preclude, or recommend, the usage of a same callback URI for all subscriptions, or unique ones, so it is assumed that this is an implementation-dependent aspect.

However, when a same callback is used for several subscriptions, the subscribing entity receiving the notification may not have all the required information to process correctly such notification.

A specific example of the problem would be:
- An NF Instance belongs to 2 distinct NF Sets
- It creates 2 subscriptions in NRF (one for each NF Set ID), to be notified when instances start/stop being part of each set, and uses the same callback URI for both subscriptions
- The NRF sends a notification when there is a new instance in one of the NF Sets
- The subscribing entity gets information about the new instance, and that such instance started being part of a set; however, the receiver of the notification does not receive information about which NF Set ID the notification refers to

To solve the issue, it is proposed to add "context data" of the subscription, so the NRF sends it in the notification to the subscribin entity.

This is, in general, a good practice in RESTful terms (not only to address this specific problem), since it decouples state between consumer and producer, and makes the notifications to be more decoupled (self-contained) from the subscription data kept by the subscribing entity.

### Summary of change:

Add a new paramter in the NotificationData, containing the subscription ID, and the subscription conditions of the corresponding subscription originally created in the NRF.

### Consequences if not approved:

The notification does not contain enough information, which makes the consumer (subscribing entity) to have to be developed following strict constraints (i.e., to always use distinct unique callback URIs), limiting the flexibility in implementation choices.

### Other comments:

This CR introduces backwards-compatible new features with impact on OpenAPI specification files:
- TS29510_Nnrf_NFManagement.yaml.

### Proposed changes:

### *** 1st Change *** (the underline indicates the content to be added to the 3GPP Technical Specification)

### 6.1.6.1 General

This clause specifies the application data model supported by the API.

Table 6.1.6.1-1 specifies the data types defined for the Nnrf_NFManagement service-based interface protocol.

**Table 6.1.6.1-1: Nnrf_NFManagement specific Data Types**

| **Data type** | **Clause defined** | **Description** |
|---|---|---|
| NFProfile | 6.1.6.2.2 | Information of an NF Instance registered in the NRF. |
| NFService | 6.1.6.2.3 | Information of a given NF Service Instance; it is part of the NFProfile of an NF Instance. |
| DefaultNotificationSubscription | 6.1.6.2.4 | Data structure for specifying the notifications the NF service subscribes by default along with callback URI. |
| IpEndPoint | 6.1.6.2.5 | IP addressing information of a given NFService; it consists on, e.g. IP address, TCP port, transport protocol... |
| UdrInfo | 6.1.6.2.6 | Information of an UDR NF Instance. |
| UdmInfo | 6.1.6.2.7 | Information of an UDM NF Instance. |
| AusfInfo | 6.1.6.2.8 | Information of an AUSF NF Instance. |
| SupiRange | 6.1.6.2.9 | A range of SUPIs (subscriber identities), either based on a numeric range, or based on regular-expression matching. |
| IdentityRange | 6.1.6.2.10 | A range of subscriber identities, either based on a numeric range, or based on regular-expression matching. |
| AmfInfo | 6.1.6.2.11 | Information of an AMF NF Instance. |
| SmfInfo | 6.1.6.2.12 | Information of an SMF NF Instance. |
| UpfInfo | 6.1.6.2.13 | Information of an UPF NF Instance. |
| SnssaiUptInfoItem | 6.1.6.2.14 | Set of parameters supported by UPF for a given S-NSSAI. |
| DnnUpfInfoItem | 6.1.6.2.15 | Set of parameters supported by UPF for a given DNN. |
| SubscriptionData | 6.1.6.2.16 | Information of a subscription to notifications to NRF events, included in subscription requests and responses. |
| NotificationData | 6.1.6.2.17 | Data sent in notifications from NRF to subscribed NF Instances. |
| NFServiceVersion | 6.1.6.2.19 | Contains the version details of an NF service. |
| PcfInfo | 6.1.6.2.20 | Information of a PCF NF Instance. |
| BsfInfo | 6.1.6.2.21 | Information of a BSF NF Instance. |
| Ipv4AddressRange | 6.1.6.2.22 | Range of IPv4 addresses. |
| Ipv6PrefixRange | 6.1.6.2.23 | Range of IPv6 prefixes. |
| InterfaceUpfInfoItem | 6.1.6.2.24 | Information of a given IP interface of an UPF. |
| UriList | 6.1.6.2.25 | Set of URIs following 3GPP hypermedia format (containing a "_links" attribute). |
| N2InterfaceAmfInfo | 6.1.6.2.26 | AMF N2 interface information |
| TaiRange | 6.1.6.2.27 | Range of TAIs (Tracking Area Identities). |
| TacRange | 6.1.6.2.28 | Range of TACs (Tracking Area Codes). |
| SnssaiSmfInfoItem | 6.1.6.2.29 | Set of parameters supported by SMF for a given S-NSSAI. |
| DnnSmtInfoItem | 6.1.6.2.30 | Set of parameters supported by SMF for a given DNN. |
| NrfInfo | 6.1.6.2.31 | Information of an NRF NF Instance, used in hierarchical NRF deployments. |
| ChfInfo | 6.1.6.2.32 | Information of a CHF NF Instance. |
| PlmnRange | 6.1.6.2.34 | Range of PLMN IDs. |
| SubscrCond | 6.1.6.2.35 | Condition to determine the set of NFs to monitor under a certain subscription in NRF. |
| NfInstanceIdCond | 6.1.6.2.36 | Subscription to a given NF Instance Id. |
| NfTypeCond | 6.1.6.2.37 | Subscription to a set of NFs based on their NF Type. |
| ServiceNameCond | 6.1.6.2.38 | Subscription to a set of NFs based on their support for a given Service Name. |
| AmfCond | 6.1.6.2.39 | Subscription to a set of AMFs, based on AMF Set Id and/or AMF Region Id. |
| GuamiListCond | 6.1.6.2.40 | Subscription to a set of AMFs, based on their GUAMIs. |
| NetworkSliceCond | 6.1.6.2.41 | Subscription to a set of NFs, based on the slices (S-NSSAI and NSI) they support . |
| NfGroupCond | 6.1.6.2.42 | Subscription to a set of NFs based on their Group Id. |
| NotifCondition | 6.1.6.2.43 | Condition (list of attributes in the NF Profile) to determine whether a notification must be sent by NRF. |
| PlmnSnssai | 6.1.6.2.44 | List of network slices (S-NSSAIs) for a given PLMN ID. |
| NwdafInfo | 6.1.6.2.45 | Information of a NWDAF NF Instance. |
| LmfInfo | 6.1.6.2.46 | Information of an LMF NF Instance. |
| GmlcInfo | 6.1.6.2.47 | Information of a GMLC NF Instance. |
| NefInfo | 6.1.6.2.48 | Information of an NEF NF Instance. |
| PfdData | 6.1.6.2.49 | List of Application IDs and/or AF IDs managed by a given NEF Instance. |
| AfEventExposureData | 6.1.6.2.50 | AF Event Exposure data managed by a given NEF Instance. |
| WAgfInfo | 6.1.6.2.51 | Information of the W-AGF endpoints. |
| TngfInfo | 6.1.6.2.52 | Information of the TNGF endpoints. |
| PcscfInfo | 6.1.6.2.53 | Information of a P-CSCF NF Instance. |
| NfSetCond | 6.1.6.2.54 | Subscription to a set of NFs based on their Set Id. |
| NfServiceSetCond | 6.1.6.2.55 | Subscription to a set of NFs based on their Service Set Id. |
| NfInfo | 6.1.6.2.56 | Information of a generic NF Instance. |
| HssInfo | 6.1.6.2.57 | Information of an HSS NF Instance. |
| ImsiRange | 6.1.6.2.58 | A range of IMSIs (subscriber identities), either based on a numeric range, or based on regular-expression matching. |
| InternalGroupIdRange | 6.1.6.2.59 | A range of Group IDs (internal group identities), either based on a numeric range, or based on regular-expression matching. |
| UpfCond | 6.1.6.2.60 | Subscription to a set of NF Instances (UPFs), able to serve a certain service area (i.e. SMF serving area or TAI list). |
| TwifInfo | 6.1.6.2.61 | Addressing information (IP addresses, FQDN) of the TWIF. |
| VendorSpecificFeature | 6.1.6.2.62 | Information about a vendor-specific feature |
| UdsfInfo | 6.1.6.2.63 | Information related to UDSF |
| ScpInfo | 6.1.6.2.65 | Information of an SCP Instance |
| ScpDomainInfo | 6.1.6.2.66 | SCP domain information |
| ScpDomainCond | 6.1.6.2.67 | Subscription to an SCP domain |
| OptionsResponse | 6.1.6.2.68 | Communication options of the NRF |
| NwdafCond | 6.1.6.2.69 | Subscription to a set of NF Instances (NWDAFs), identified by Analytics ID(s), S-NSSAI(s) or NWDAF Serving Area information, i.e. list of TAIs for which the NWDAF can provide analytics. |
| NefCond | 6.1.6.2.70 | Subscription to a set of NF Instances (NEFs), identified by Event ID(s) provided by AF, S-NSSAI(s), AF Instance ID, Application Identifier, External Identifier, External Group Identifier, or domain name. |
| SuciInfo | 6.1.6.2.71 | SUCI information containing Routing Indicator and Home Network Public Key ID. |
| SeppInfo | 6.1.6.2.72 | Information of a SEPP Instance |
| AanfInfo | 6.1.6.2.73 | Information of an AAnF NF Instance. |
| 5GDdnmfInfo | 6.1.6.2.74 | Information of a 5G DDNMF NF Instance. |
| MfafInfo | 6.1.6.2.75 | Information of the MFAF NF Instance. |
| NwdafCapability | 6.1.6.2.76 | Indicates the capability supported by the NWDAF. |
| DccfInfo | 6.1.6.2.80 | Information of a DCCF NF Instance. |
| NsacfInfo | 6.1.6.2.81 | Information of an NSACF NF Instance. |
| NsacfCapability | 6.1.6.2.82 | NSACF service capability. |
| DccfCond | 6.1.6.2.83 | Subscription to a set of NF Instances (DCCFs), identified by NF types, NF Set Id(s) or DCCF Serving Area information, i.e. list of TAIs served by the DCCF. |
| MIAnalyticsInfo | 6.1.6.2.84 | ML Analytics Filter information supported by the Nnwdaf_MLModelProvision service |
| MbSmfInfo | 6.1.6.2.85 | Information of a MB-SMF NF Instance |
| TmgiRange | 6.1.6.2.86 | Range of TMGIs |
| MbsSession | 6.1.6.2.87 | MBS Session served by an MB-SMF |
| SnssaiMbSmfInfoItem | 6.1.6.2.88 | Parameters supported by an MB-SMF for a given S-NSSAI |
| DnnMbSmfInfoItem | 6.1.6.2.89 | Parameters supported by an MB-SMF for a given DNN |
| MbsAreaSession | 6.1.6.2.90 | MBS Session in a specific MBS Service Area |
| TsctsfInfo | 6.1.6.2.91 | Information of a TSCTSF NF Instance. |
| SnssaiTsctsfInfoItem | 6.1.6.2.92 | Set of parameters supported by TSCTSF for a given S-NSSAI. |
| DnnTsctsfInfoItem | 6.1.6.2.93 | Set of parameters supported by TSCTSF for a given DNN. |
| MbUpfInfo | 6.1.6.2.94 | Information of a MB-UPF NF Instance. |
| AfSliceDnn | 6.1.6.2.95 | AF specific Slices and DNNs. |
| TrustAfInfo | 6.1.6.2.96 | Information of a trusted AF Instance |
| SnssaiInfoItem | 6.1.6.2.97 | Set of parameters supported by NF for a given S-NSSAI. |
| DnnInfoItem | 6.1.6.2.98 | Set of parameters supported by NF for a given DNN. |
| CollocatedNfInstance | 6.1.6.2.99 | Information related to collocated NF type(s) and corresponding NF Instance(s) when the NF is collocated with NFs supporting other NF types. |
| ServiceNameListCond | 6.1.6.2.100 | Subscription to a set of NF Instances that offer a service name in the Service Name list. |
| NfGroupListCond | 6.1.6.2.101 | Subscription to a set of NF Instances, identified by a NF Group Identity in the NF Group Identity list. |
| PImnOauth2 | 6.1.6.2.102 | Per PLMN Oauth2.0 indication. |
| SubscriptionContext | 6.1.6.2.x | Context data related to a created subscription, to be |
| | | included in notifications sent by NRF. |
| Fqdn | 6.1.6.3.2 | Fully Qualified Domain Name. |
| NefId | 6.1.6.3.2 | Identity of the NEF. |
| VendorId | 6.1.6.3.2 | Vendor ID of the NF Service instance (Private Enterprise Number assigned by IANA) |
| WildcardDnai | 6.1.6.3.2 | Wildcard DNAI |
| NFType | 6.1.6.3.3 | NF types known to NRF. |
| NotificationType | 6.1.6.3.4 | Types of notifications used in Default Notification URIs in the NF Profile of an NF Instance. |
| TransportProtocol | 6.1.6.3.5 | Types of transport protocol used in a given IP endpoint of an NF Service Instance. |
| NotificationEventType | 6.1.6.3.6 | Types of events sent in notifications from NRF to subscribed NF Instances. |
| NFStatus | 6.1.6.3.7 | Status of a given NF Instance stored in NRF. |
| DataSetId | 6.1.6.3.8 | Types of data sets stored in UDR. |
| UPInterfaceType | 6.1.6.3.9 | Types of User-Plane interfaces of the UPF. |
| ServiceName | 6.1.6.3.11 | Service names known to NRF. |
| NFServiceStatus | 6.1.6.3.12 | Status of a given NF Service Instance of an NF Instance stored in NRF. |
| AnNodeType | 6.1.6.3.13 | Access Network Node Type (gNB, ng-eNB...). |
| ConditionEventType | 6.1.6.3.14 | Indicates whether a notification is due to the NF Instance to start or stop being part of a condition for a subscription to a set of NFs |
| IpReachability | 6.1.6.3.15 | Indicates the type(s) of IP addresses reachable via an SCP. |
| CollocatedNfType | 6.1.6.3.17 | Possible NF types supported by a collocated NF. |

Editor's Note: A general solution of NRF handling towards absent attributes (not registered by the NF or not supported by NF with early version) is FFS.

Table 6.1.6.1-2 specifies data types re-used by the Nnrf_NFManagement service-based interface protocol from other specifications, including a reference to their respective specifications and when needed, a short description of their use within the Nnrf_NFManagement service-based interface.

**Table 6.1.6.1-2: Nnrf_NFManagement re-used Data Types**

| **Data type** | **Reference** | **Comments** |
|---|---|---|
| N1MessageClass | 3GPP TS 29518 [6] | The N1 message type |
| N2InformationClass | 3GPP TS 29.518 [6] | The N2 information type |
| IPv4Addr | 3GPP TS 29.571 [7] | |
| IPv6Addr | 3GPP TS 29.571 [7] | |
| IPv6Prefix | 3GPP TS 29.571 [7] | |
| Uri | 3GPP TS 29.571 [7] | |
| Dnn | 3GPP TS 29571 [7] | |
| SupportedFeatures | 3GPP TS 29.571 [7] | |
| Snssai | 3GPP TS 29.571 [7] | |
| PlmnId | 3GPP TS 29.571 [7] | |
| Guami | 3GPP TS 29.571 [7] | |
| Tai | 3GPP TS 29.571 [7] | |
| NfInstanceId | 3GPP TS 29.571 [7] | |
| LinksValueSchema | 3GPP TS 29.571 [7] | 3GPP Hypermedia link |
| UriScheme | 3GPP TS 29.571 [7] | |
| AmfName | 3GPP TS 29.571 [7] | |
| DateTime | 3GPP TS 29.571 [7] | |
| Dnai | 3GPP TS 29.571 [7] | |
| ChangeItem | 3GPP TS 29.571 [7] | |
| DiameterIdentity | 3GPP TS 29.571 [7] | |
| AccessType | 3GPP TS 29.571 [7] | |
| NfGroupId | 3GPP TS 29.571 [7] | Network Function Group Id |
| AmfRegionId | 3GPP TS 29.571 [7] | |
| AmfSetId | 3GPP TS 29.571 [7] | |
| PduSessionType | 3GPP TS 29.571 [7] | |
| AtsssCapability | 3GPP TS 29.571 [7] | Capability to support procedures related to Access Traffic Steering, Switching, Splitting. |
| Nid | 3GPP TS 29.571 [7] | |
| PlmnIdNid | 3GPP TS 29.571 [7] | |
| NfSetId | 3GPP TS 29.571 [7] | NF Set ID (see clause 28.12 of 3GPP TS 23.003 [12]) |
| NfServiceSetId | 3GPP TS 29.571 [7] | NF Service Set ID (see clause 28.13 of 3GPP TS 23.003 [12]) |
| GroupId | 3GPP TS 29.571 [7] | Internal Group Identifier |
| RatType | 3GPP TS 29.571 [7] | RAT Type |
| DurationSec | 3GPP TS 29571 [7] | |
| RedirectResponse | 3GPP TS 29.571 [7] | Response body of the redirect response message. |
| ExtSnssai | 3GPP TS 29.571 [7] | |
| AreaSessionId | 3GPP TS 29.571 [7] | Area Session Identifier used for an MBS session with location dependent content |
| MbsSessionId | 3GPP TS 29.571 [7] | MBS Session Identifier |
| MbsServiceArea | 3GPP TS 29571 [7] | MBS Service Area |
| IpAddr | 3GPP TS 29.571 [7] | IP Address |
| EventId | 3GPP TS 29.520 [32] | Defined in Nnwdaf_AnalyticsInfo API. |
| NwdafEvent | 3GPP TS 29.520 [32] | Defined in Nnwdaf_EventsSubscription API. |
| ExternalClientType | 3GPP TS 29.572 [33] | |
| LMFIdentification | 3GPP TS 29.572 [33] | LMF Identification |
| AfEvent | 3GPP TS 29.517 [35] | Defined in Naf_EventExposure API |
| SupportedGADShapes | 3GPP TS 29.572 [33] | Supported GAD Shapes |

### *** 2nd Change *** (the underline indicates the content to be added to the 3GPP Technical Specification)

### 6.1.6.2.17 Type: NotificationData

**Table 6.1.6.2.17-1: Definition of type NotificationData**

| **Attribute name** | **Data type** | **P** | **Cardinality** | **Description** |
|---|---|---|---|---|
| Event | NotificationEventType | M | 1 | Notification type. It shall take the values "NF_REGISTERED", "NF_DEREGISTERED" or "NF_PROFILE CHANGED". |
| nfInstanceUri | Uri | M | 1 | Uri of the NF Instance (see clause 6.1.3.3.2) associated to the notification event. |
| nfProfile | NFProfile | C | 0..1 | New NF Profile or Updated NF Profile; it shall be present when the notification type is "NF_REGISTERED" and it may be present when the notification type is "NF_PROFILE_CHANGED". (NOTE 3) |
| profilechanges | array(Changeltem) | C | 1..N | List of changes on the profile of the NF Instance associated to the notification event; it may be present when the notification type is "NF_PROFILE_CHANGED" (see NOTE 1, NOTE 2). |
| conditionEvent | ConditionEventType | C | 0..1 | Type of event indicating wether a change of NF Profile results in that the NF Instance starts or stops being part of a given set of NF Instances, as indicated in the subscription condition (see attribute "subscrcond" in clause 6.1.6.2.16). |
| | | | | It can take the value "NF _ADDED" (if the NF Instance starts being part of a given set) or "NF _REMOVED" (if the NF Instance stops being part of a given set). |
| | | | | (NOTE 3) |
| subscriptionContext | SubscriptionContext | C | 0..1 | It shall contain data related to the subscription to which this notification belongs to, such as the subscription ID and the subscription conditions. |
| | | | | The NRF should include this attribute, to facilitate to the subscribing entity the identification of the subscription data, or context, that triggered this notification. |
| NOTE 1: If "event" attribute takes the value "NF_PROFILE_CHANGED", then either "nfProfile" or "profileChanges" attributes shall be present, but not both. | | | | |
| NOTE 2: The NRF shall notify about NF Profile changes affecting attributes of type "array" only as a complete replacement of the whole array (i.e. it shall not notify about changes of individual array elements). | | | | |
| NOTE 3: When a change in an NF Profile results in an NF to start being part of a given set, the NRF shall indicate such condition by including the "conditionEvent" attribute with value "NF_ADDED", and it shall include in the notification the "nfProfile" attribute with the full NF Profile of the NF Instance; the "profileChanges" attribute shall not be included. | | | | |
| When a change in an NFProfile results in an NF to stop being part of a given set, the NRF shall indicate such condition by including the "conditionEvent" attribute with value "NF_REMOVED", and both attributes "nfProfile" and "profileChanges" shall be absent. | | | | |

EXAMPLE: Notification payload sent from NRF when an NF Instance has changed its profile by updating the value of the "recoveryTime" attribute of its NF Profile, and updated any attribute of any of its NF Service Instances:

```
{
    "event": "NF_PROFILE_CHANGED" ,
    "nfInstanceUri": ".../nf-instances/4947s69a-f61b-4bc1-b9da-47c9c5d14b64",
    "profileChanges": [
     {
      "op": "REPLACE",
      "path": "/recoveryTime",
      "newValue": "2018-12-30T23:20:50Z"
     },
     {
      "op": "REPLACE",
      "path": "/nfServices",
      "newValue": [ ...new array content... ]
     }
    ]
   }
     
```

### *** 3rd Change *** (the underline indicates the content to be added to the 3GPP Technical Specification)

### 6.1.6.2.xType: SubscriptionContext

**Table 6.1.6.2.x-1: Definition of type SubscriptionContext**

| **Attribute name** | **Data type** | **P** | **Cardinality** | **Description** |
|---|---|---|---|---|
| subscriptionId | string | M | 1 | Subscription ID of the corresponding subscription resource that originated the notification |
| subscrCond | SubscrCond | O | 1 | If present, this attribute shall contain the conditions identifying the set of NF Instances whose status was requested to be monitored in the corresponding subscription that originated this notification |

### *** 4th Change *** (the underline indicates the content to be added to the 3GPP Technical Specification)

### A.2 Nnrf_NFManagement API

*(... text not shown for clarity ...)* 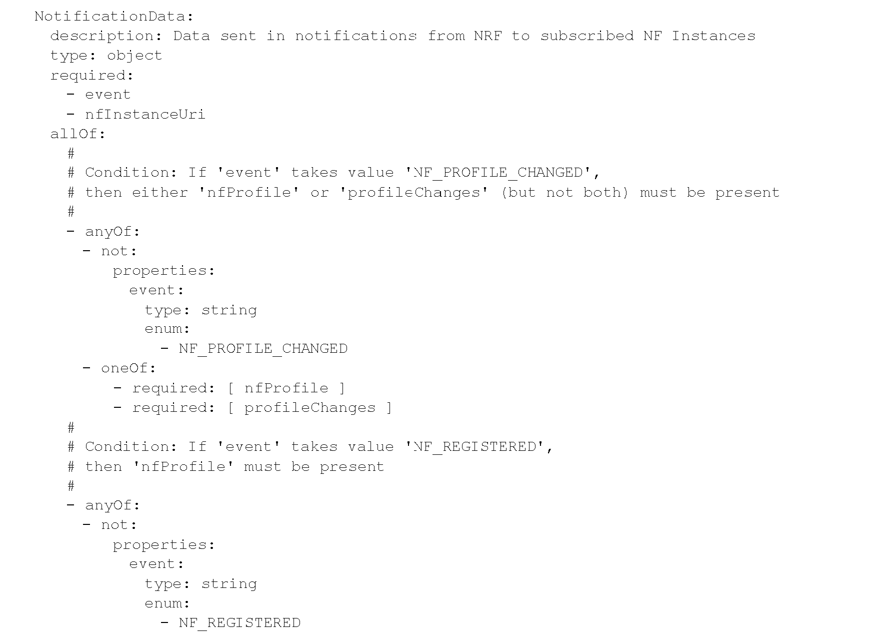 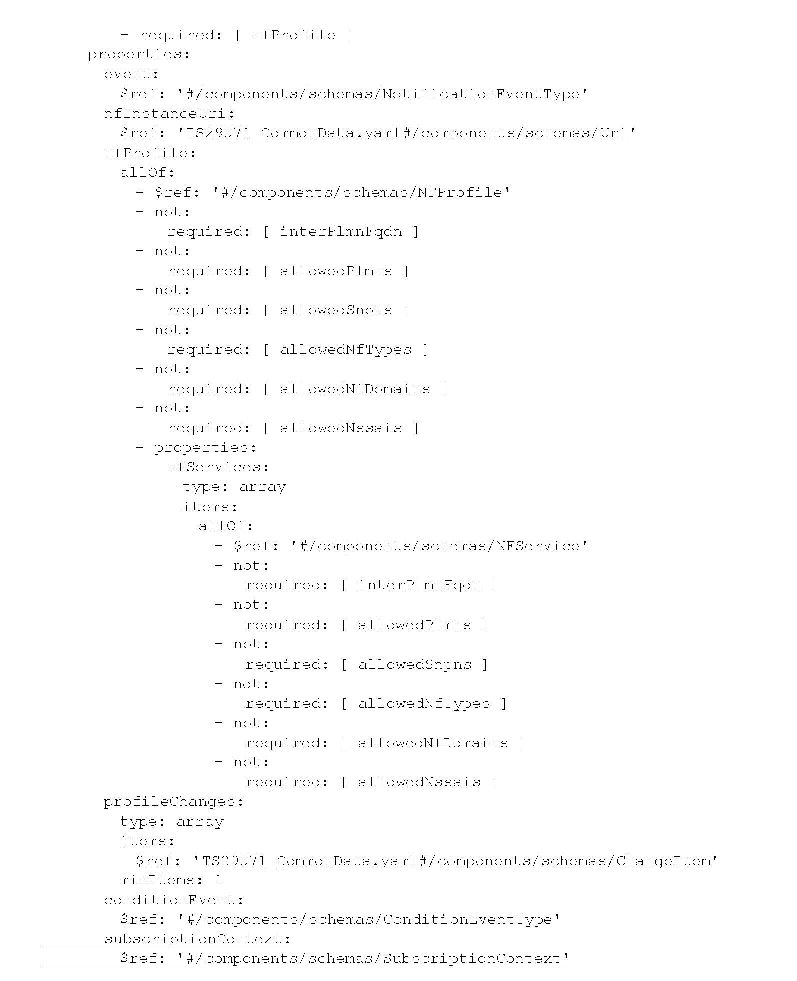 *(... text not shown for clarity ...)*

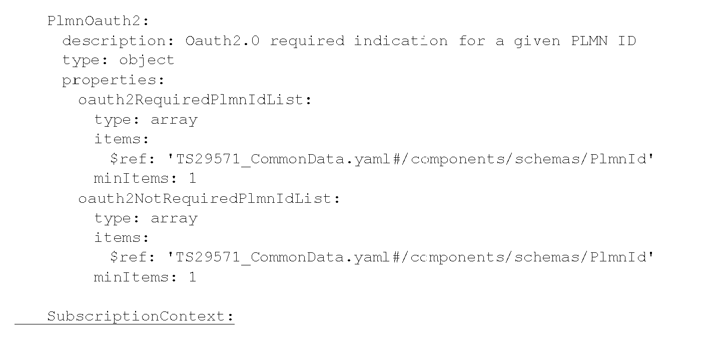

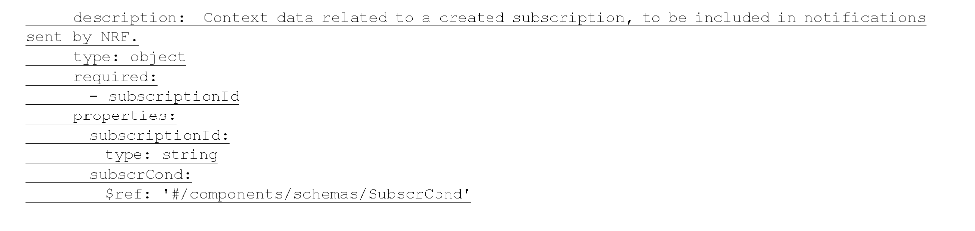

### *** End of Changes ***

Example embodiments are described herein with reference to block diagrams and/or flowchart illustrations of computer-implemented methods, apparatus (systems and/or devices) and/or non-transitory computer program products. It is understood that a block of the block diagrams and/or flowchart illustrations, and combinations of blocks in the block diagrams and/or flowchart illustrations, may be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that may direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

The is defined solely by the appended claims.

### Abbreviations

- 3GPP: 3rd Generation Partnership Project
- 5G: fifth generation of mobile communication technology
- AMF: Access and Mobility Management Function
- API: Application Programming Interface
- HTTP: Hyper Text Transfer Protocol
- NF: Network Function
- NRF: Network Repository Function
- OTT: Over The Top
- PLMN: Public Land Mobile Network
- SMF: Session Management Function
- UE: User Equipment.
- URI: Uniform Resource Identifier.

## Claims

1. A method (400) performed by a first network function (101) implementing a Network Repository Function, NRF, comprising:
- receiving (S401), from a second network function (102, 202), one or more subscription requests for subscribing one or more events associated with a third network function (103), wherein each of the one or more subscription requests comprises a first parameter indicating a subscription condition and a second parameter indicating a common callback Uniform Resource Identifier, URI, wherein receiving (S401) the one or more subscription requests for subscribing the one or more events further comprising:
-- receiving a first subscription request including the first parameter indicating a first subscription condition and the second parameter indicating the common callback URI and creating a first subscription according to the first subscription request, including assigning a first subscription ID for the first subscription; and
-- receiving a second subscription request including the first parameter indicating a second subscription condition and the second parameter indicating the common callback URI and creating a second subscription according to the second subscription request, including assigning a second subscription ID for the second subscription; and
- transmitting (S402) a notification request for notifying the one or more event to the second network function (102, 202) according to the common callback URI, wherein the notification request includes a third parameter indicating a subscription context regarding the subscription request, wherein the subscription context relates to a created subscription and includes at least one of the first subscription ID and the first subscription condition or at least one of the second subscription ID and the second subscription condition, depending on which of the first or second subscription condition occurs.

2. The method (400) according to claim 1,
wherein the subscribed event is a network function profile change of the third network function (103) and wherein the subscription condition includes that the third network function (103) is added into or removed from a network function set.

3. The method (400) according to claim 1 or 2, wherein:
- the common callback URI includes a notification endpoint of the second network function (102, 202) and an optional notification correlation ID.

4. The method (400) according to any one of claims 1 to 3, wherein:
- the second network function (102, 202) and the third network function (103) are a service consumer and a service producer respectively for a specific service.

5. The method (400) according to any one of claims 1 to 4, wherein:
- the third network function (103) belongs to one or more network function sets; wherein the first subscription condition is that the third network function (103) is added into or removed from a first set of the one or more network function sets; and wherein the second subscription condition is that the third network function (103) is added into or removed from a second set of the one or more network function sets.

6. A method (500) performed by a second network function (102, 202), comprising:
- transmitting (S501), to a first network function (101) implementing a Network Repository Function, NRF, one or more subscription requests for subscribing one or more events associated with a third network function (103) wherein each of the one or more subscription request includes a first parameter indicating a subscription condition and a second parameter indicating a common callback Uniform Resource Identifier, URI, wherein transmitting (S501) the one or more subscription requests for subscribing the one or more events further comprising:
-- transmitting a first subscription request including the first parameter indicating a first subscription condition and the second parameter indicating the common callback URI and receiving a first subscription response from the first network function, wherein the first subscription response includes a first subscription ID of a first subscription, which is created in the first network function (101) according to the first subscription request; and
-- transmitting a second subscription request including the first parameter indicating a second subscription condition and the second parameter indicating the common callback URI and receiving a second subscription response from the first network function, wherein the second subscription response includes a second subscription ID of a second subscription, which is created in the first network function (101) according to the second subscription request; and
- receiving (S502) a notification request, which is transmitted according to the common callback URI, for notifying the one or more event from the first network function (101), wherein the notification request includes a third parameter indicating a subscription context regarding the subscription request, wherein the subscription context relates to a created subscription and includes at least one of the first subscription ID and the first subscription condition or at least one of the second subscription ID and the second subscription condition, depending on which of the first or second subscription condition occurs.

7. The method (400) according to claim 6,
wherein the subscribed event is a network function profile change of the third network function (103) and wherein the subscription condition includes that the third network function (103) is added into or removed from a network function set.

8. The method (500) according to claim 6, further comprising:
- finding the related subscription data within the subscription request according to the received subscription context; and
- handling the notified data within the notification request accordingly.

9. The method (500) according to any one of claims 6 to 8, wherein:
- the common callback URI includes a notification endpoint of the second network function and an optional notification correlation ID.

10. The method (400) according to any one of claims 6 to 9, wherein:
- the second network function (102, 202) and the third network function (103) are a service consumer and a service producer respectively for a specific service.

11. The method (400) according to any one of claims 6 to 10, wherein:
- the third network function (103) belongs to one or more network function sets; wherein the first subscription condition is that the third network function (103) is added into or removed from a first set of the one or more network function sets; and wherein the second subscription condition is that the third network function (103) is added into or removed from a second set of the one or more network function sets.

12. A first network function (101, 600) implementing a Network Repository Function, NRF, comprising:
at least one processor (601); and
a non-transitory computer readable medium (602) coupled to the at least one processor (601), the non-transitory computer readable medium (602) stores instructions executable by the at least one processor (601), whereby the at least one processor (601) is configured to perform the method (400) according to any one of claims 1 to 5.

13. A second network function (102, 202, 700), comprising:
at least one processor (701); and
a non-transitory computer readable medium (702) coupled to the at least one processor (701), the non-transitory computer readable medium (702) stores instructions executable by the at least one processor (701), whereby the at least one processor (701) is configured to perform the method (500) according to any one of claims 6 to 11.

14. A computer readable medium (802) comprising computer readable code, which when run on an apparatus (101, 102, 202, 600, 700, 800), causes the apparatus (101, 102, 202, 600, 700, 800) to perform the method (400, 500) according to any one of claims 1 to 11.

15. A computer program product (804) comprising computer readable code, which when run on an apparatus (101, 102, 202, 600, 700, 800), causes the apparatus (101, 102, 202, 600, 700, 800) to perform the method (400, 500) according to any one of claims 1 to 11.

## Patentansprüche

1. Verfahren (400), das durch eine erste Netzwerkfunktion (101) durchgeführt wird, die eine Network Repository Function, NRF, implementiert, umfassend:
- Empfangen (S401), von einer zweiten Netzwerkfunktion (102, 202), einer oder mehrerer Abonnementanforderungen zum Abonnieren eines oder mehrerer Ereignisse, die einer dritten Netzwerkfunktion (103) zugeordnet sind, wobei jede von der einen oder den mehreren Abonnementanforderungen einen ersten Parameter, der eine Abonnementbedingung angibt, und einen zweiten Parameter, der eine gemeinsame Callback Uniform Resource Identifier, Callback-URI, angibt, umfasst, wobei das Empfangen (S401) der einen oder der mehreren Abonnementanforderungen zum Abonnieren des einen oder der mehreren Ereignisse ferner Folgendes umfasst:
-- Empfangen einer ersten Abonnementanforderung, die den ersten Parameter, der eine erste Abonnementbedingung angibt, und den zweiten Parameter, der die gemeinsame Callback-URI angibt, beinhaltet, und Erstellen eines ersten Abonnements gemäß der ersten Abonnementanforderung, einschließlich Zuweisen einer ersten Abonnement-ID für das erste Abonnement; und
-- Empfangen einer zweiten Abonnementanforderung, die den ersten Parameter, der eine zweite Abonnementbedingung angibt, und den zweiten Parameter, der die gemeinsame Callback-URI angibt, beinhaltet, und Erstellen eines zweiten Abonnements gemäß der zweiten Abonnementanforderung, einschließlich Zuweisen einer zweiten Abonnement-ID für das zweite Abonnement; und
- Übertragen (S402) einer Benachrichtigungsanforderung zum Benachrichtigen des einen oder der mehreren Ereignisse an die zweite Netzwerkfunktion (102, 202) gemäß der gemeinsamen Callback-URI, wobei die Benachrichtigungsanforderung einen dritten Parameter beinhaltet, der einen Abonnementkontext in Bezug auf die Abonnementanforderung angibt, wobei der Abonnementkontext ein erstelltes Abonnement betrifft und mindestens eines von der ersten Abonnement-ID und der ersten Abonnementbedingung oder mindestens eines von der zweiten Abonnement-ID und der zweiten Abonnementbedingung beinhaltet, in Abhängigkeit davon, welche der ersten oder der zweiten Abonnementbedingung auftritt.

2. Verfahren (400) nach Anspruch 1,
wobei das abonnierte Ereignis eine Netzwerkfunktionsprofiländerung der dritten Netzwerkfunktion (103) ist und wobei die Abonnementbedingung beinhaltet, dass die dritte Netzwerkfunktion (103) zu einem Netzwerkfunktionssatz hinzugefügt oder von diesem entfernt wird.

3. Verfahren (400) nach Anspruch 1 oder 2, wobei:
- die gemeinsame Callback-URI einen Benachrichtigungsendpunkt der zweiten Netzwerkfunktion (102, 202) und eine optionale Benachrichtigungskorrelations-ID beinhaltet.

4. Verfahren (400) nach einem der Ansprüche 1 bis 3, wobei:
- die zweite Netzwerkfunktion (102, 202) und die dritte Netzwerkfunktion (103) ein Servicekonsument bzw. ein Serviceproduzent für einen spezifischen Service sind.

5. Verfahren (400) nach einem der Ansprüche 1 bis 4, wobei:
- die dritte Netzwerkfunktion (103) zu einem oder mehreren Netzwerkfunktionssätzen gehört; wobei die erste Abonnementbedingung ist, dass die dritte Netzwerkfunktion (103) zu einem ersten Satz des einen oder der mehreren Netzwerkfunktionssätze hinzugefügt oder von diesem entfernt wird; und wobei die zweite Abonnementbedingung ist, dass die dritte Netzwerkfunktion (103) zu einem zweiten Satz des einen oder der mehreren Netzwerkfunktionssätze hinzugefügt oder von diesem entfernt wird.

6. Verfahren (500), das durch eine zweite Netzwerkfunktion (102, 202) durchgeführt wird, umfassend:
- Übertragen (S501), an eine erste Netzwerkfunktion (101), die eine Network Repository Function, NRF, implementiert, einer oder mehrerer Abonnementanforderungen zum Abonnieren eines oder mehrerer Ereignisse, die einer dritten Netzwerkfunktion (103) zugeordnet sind, wobei jede von der einen oder den mehreren Abonnementanforderungen einen ersten Parameter, der eine Abonnementbedingung angibt, und einen zweiten Parameter, der eine gemeinsame Callback Uniform Resource Identifier, Callback-URI, angibt, beinhaltet, wobei das Übertragen (S501) der einen oder der mehreren Abonnementanforderungen zum Abonnieren des einen oder der mehreren Ereignisse ferner Folgendes umfasst:
-- Übertragen einer ersten Abonnementanforderung, die den ersten Parameter, der eine erste Abonnementbedingung angibt, und den zweiten Parameter, der die gemeinsame Callback-URI angibt, beinhaltet, und Empfangen einer ersten Abonnementreaktion von der ersten Netzwerkfunktion, wobei die erste Abonnementreaktion eine erste Abonnement-ID eines ersten Abonnements beinhaltet, das in der ersten Netzwerkfunktion (101) gemäß der ersten Abonnementanforderung erstellt wird; und
-- Übertragen einer zweiten Abonnementanforderung, die den ersten Parameter, der eine zweite Abonnementbedingung angibt, und den zweiten Parameter, der die gemeinsame Callback-URI angibt, beinhaltet, und Empfangen einer zweiten Abonnementreaktion von der ersten Netzwerkfunktion, wobei die zweite Abonnementreaktion eine zweite Abonnement-ID eines zweiten Abonnements beinhaltet, das in der ersten Netzwerkfunktion (101) gemäß der zweiten Abonnementanforderung erstellt wird; und
- Empfangen (S502) einer Benachrichtigungsanforderung, die gemäß der gemeinsamen Callback-URI übertragen wird, zum Benachrichtigen des einen oder der mehreren Ereignisse von der ersten Netzwerkfunktion (101), wobei die Benachrichtigungsanforderung einen dritten Parameter beinhaltet, der einen Abonnementkontext in Bezug auf die Abonnementanforderung angibt, wobei der Abonnementkontext ein erstelltes Abonnement betrifft und mindestens eines von der ersten Abonnement-ID und der ersten Abonnementbedingung oder mindestens eines von der zweiten Abonnement-ID und der zweiten Abonnementbedingung beinhaltet, in Abhängigkeit davon, welche der ersten oder der zweiten Abonnementbedingung auftritt.

7. Verfahren (400) nach Anspruch 6,
wobei das abonnierte Ereignis eine Netzwerkfunktionsprofiländerung der dritten Netzwerkfunktion (103) ist und wobei die Abonnementbedingung beinhaltet, dass die dritte Netzwerkfunktion (103) zu einem Netzwerkfunktionssatz hinzugefügt oder von diesem entfernt wird.

8. Verfahren (500) nach Anspruch 6, ferner umfassend:
- Finden der zugehörigen Abonnementdaten innerhalb der Abonnementanforderung gemäß dem empfangenen Abonnementkontext;
und
- entsprechendes Abwickeln der benachrichtigten Daten innerhalb der Benachrichtigungsanforderung.

9. Verfahren (500) nach einem der Ansprüche 6 bis 8, wobei:
- die gemeinsame Callback-URI einen Benachrichtigungsendpunkt der zweiten Netzwerkfunktion und eine optionale Benachrichtigungskorrelations-ID beinhaltet.

10. Verfahren (400) nach einem der Ansprüche 6 bis 9, wobei:
- die zweite Netzwerkfunktion (102, 202) und die dritte Netzwerkfunktion (103) ein Servicekonsument bzw. ein Serviceproduzent für einen spezifischen Service sind.

11. Verfahren (400) nach einem der Ansprüche 6 bis 10, wobei:
- die dritte Netzwerkfunktion (103) zu einem oder mehreren Netzwerkfunktionssätzen gehört; wobei die erste Abonnementbedingung ist, dass die dritte Netzwerkfunktion (103) zu einem ersten Satz des einen oder der mehreren Netzwerkfunktionssätze hinzugefügt oder von diesem entfernt wird; und wobei die zweite Abonnementbedingung ist, dass die dritte Netzwerkfunktion (103) zu einem zweiten Satz des einen oder der mehreren Netzwerkfunktionssätze hinzugefügt oder von diesem entfernt wird.

12. Erste Netzwerkfunktion (101, 600), die eine Network Repository Function, NRF, implementiert, umfassend:
mindestens einen Prozessor (601); und
ein nichttransitorisches computerlesbares Medium (602), das an den mindestens einen Prozessor (601) gekoppelt ist, wobei auf dem nichttransitorischen computerlesbaren Medium (602) Anweisungen gespeichert sind, die von dem mindestens einen Prozessor (601) ausführbar sind, wobei der mindestens eine Prozessor (601) dazu konfiguriert ist, das Verfahren (400) nach einem der Ansprüche 1 bis 5 durchzuführen.

13. Zweite Netzwerkfunktion (102, 202, 700), umfassend:
mindestens einen Prozessor (701); und
ein nichttransitorisches computerlesbares Medium (702), das an den mindestens einen Prozessor (701) gekoppelt ist, wobei auf dem nichttransitorischen computerlesbaren Medium (702) Anweisungen gespeichert sind, die von dem mindestens einen Prozessor (701) ausführbar sind, wobei der mindestens eine Prozessor (701) dazu konfiguriert ist, das Verfahren (500) nach einem der Ansprüche 6 bis 11 durchzuführen.

14. Computerlesbares Medium (802), umfassend computerlesbaren Code, der bei Ausführung auf einer Einrichtung (101, 102, 202, 600, 700, 800) die Einrichtung (101, 102, 202, 600, 700, 800) dazu veranlasst, das Verfahren (400, 500) nach einem der Ansprüche 1 bis 11 durchzuführen.

15. Computerprogrammprodukt (804), umfassend computerlesbaren Code, der bei Ausführung auf einer Einrichtung (101, 102, 202, 600, 700, 800) die Einrichtung (101, 102, 202, 600, 700, 800) dazu veranlasst, das Verfahren (400, 500) nach einem der Ansprüche 1 bis 11 durchzuführen.

## Revendications

1. Procédé (400) réalisé par une première fonction réseau (101) mettant en œuvre une fonction de référentiel réseau, NRF, comprenant :
- la réception (S401), à partir d'une deuxième fonction réseau (102, 202), d'une ou plusieurs demandes d'abonnement à un ou plusieurs événements associés à une troisième fonction réseau (103), chacune des une ou plusieurs demandes d'abonnement comprenant un premier paramètre indiquant une condition d'abonnement et un second paramètre indiquant un identifiant de ressource uniforme, URI, de rappel commun, la réception (S401) des une ou plusieurs demandes d'abonnement aux un ou plusieurs événements comprend en outre :
-- la réception d'une première demande d'abonnement incluant le premier paramètre indiquant une première condition d'abonnement et le deuxième paramètre indiquant l'URI de rappel commun et la création d'un premier abonnement selon la première demande d'abonnement, y compris l'attribution d'un premier ID d'abonnement pour le premier abonnement ; et
**--** la réception d'une deuxième demande d'abonnement incluant le premier paramètre indiquant une deuxième condition d'abonnement et le deuxième paramètre indiquant l'URI de rappel commun et la création d'un deuxième abonnement selon la deuxième demande d'abonnement, y compris l'attribution d'un deuxième ID d'abonnement pour le deuxième abonnement ; et
- la transmission (S402) d'une demande de notification pour notifier les un ou plusieurs événements à la deuxième fonction réseau (102, 202) selon l'URI de rappel commun, la demande de notification comprenant un troisième paramètre indiquant un contexte d'abonnement concernant la demande d'abonnement, le contexte d'abonnement se rapportant à un abonnement créé et comprenant au moins l'un du premier ID d'abonnement et de la première condition d'abonnement ou au moins l'un du deuxième ID d'abonnement et de la deuxième condition d'abonnement, selon laquelle de la première ou de la deuxième condition d'abonnement se produit.

2. Procédé (400) selon la revendication 1,
dans lequel l'événement abonné est un changement de profil de fonction réseau de la troisième fonction réseau (103) et dans lequel la condition d'abonnement comprend que la troisième fonction réseau (103) est ajoutée ou supprimée d'un ensemble de fonctions réseau.

3. Procédé (400) selon la revendication 1 ou 2, dans lequel :
- l'URI de rappel commun comprend un point de terminaison de notification de la deuxième fonction réseau (102, 202) et un ID de corrélation de notification éventuel.

4. Procédé (400) selon l'une quelconque des revendications 1 à 3, dans lequel :
- la deuxième fonction réseau (102, 202) et la troisième fonction réseau (103) sont respectivement un consommateur de service et un producteur de service pour un service spécifique.

5. Procédé (400) selon l'une quelconque des revendications 1 à 4, dans lequel :
- la troisième fonction réseau (103) appartient à un ou plusieurs ensembles de fonctions réseau ; dans lequel la première condition d'abonnement est que la troisième fonction réseau (103) est ajoutée ou supprimée d'un premier ensemble des un ou plusieurs ensembles de fonctions réseau ; et dans lequel la deuxième condition d'abonnement est que la troisième fonction réseau (103) est ajoutée ou supprimée d'un deuxième ensemble des un ou plusieurs ensembles de fonctions réseau.

6. Procédé (500) réalisé par une deuxième fonction réseau (102, 202), comprenant :
- la transmission (S501), à une première fonction réseau (101) mettant en œuvre une fonction de référentiel réseau, NRF, d'une ou plusieurs demandes d'abonnement pour un ou plusieurs événements associés à une troisième fonction réseau (103), chacune des une ou plusieurs demandes d'abonnement comprenant un premier paramètre indiquant une condition d'abonnement et un deuxième paramètre indiquant un identifiant de ressource uniforme, URI, de rappel commun, la transmission (S501) des une ou plusieurs demandes d'abonnement pour un ou plusieurs événements comprenant en outre :
-- la transmission d'une première demande d'abonnement comprenant le premier paramètre indiquant une première condition d'abonnement et le deuxième paramètre indiquant l'URI de rappel commun et la réception d'une première réponse d'abonnement de la première fonction réseau, la première réponse d'abonnement comprenant un premier ID d'abonnement d'un premier abonnement, qui est créé dans la première fonction réseau (101) selon la première demande d'abonnement ; et
-- la transmission d'une deuxième demande d'abonnement incluant le premier paramètre indiquant une deuxième condition d'abonnement et le deuxième paramètre indiquant l'URI de rappel commun et la réception d'une deuxième réponse d'abonnement de la première fonction réseau, la deuxième réponse d'abonnement incluant un deuxième identifiant d'abonnement d'un deuxième abonnement, qui est créé dans la première fonction réseau (101) selon la deuxième demande d'abonnement ; et
- la réception (S502) d'une demande de notification, qui est transmise selon l'URI de rappel commun, pour notifier les un ou plusieurs événements de la première fonction réseau (101), dans lequel la demande de notification comprend un troisième paramètre indiquant un contexte d'abonnement concernant la demande d'abonnement, dans lequel le contexte d'abonnement se rapporte à un abonnement créé et comprend au moins l'un du premier ID d'abonnement et de la première condition d'abonnement ou au moins l'un du deuxième ID d'abonnement et de la deuxième condition d'abonnement, selon laquelle de la première ou de la deuxième condition d'abonnement se produit.

7. Procédé (400) selon la revendication 6,
dans lequel l'événement abonné est un changement de profil de fonction réseau de la troisième fonction réseau (103) et dans lequel la condition d'abonnement comprend que la troisième fonction réseau (103) est ajoutée ou supprimée d'un ensemble de fonctions réseau.

8. Procédé (500) selon la revendication 6, comprenant en outre :
- la trouvaille des données d'abonnement associées dans la demande d'abonnement en fonction du contexte d'abonnement reçu ; et
- le traitement des données notifiées dans la demande de notification en conséquence.

9. Procédé (500) selon l'une quelconque des revendications 6 à 8, dans lequel :
- l'URI de rappel commun inclut un point de terminaison de notification de la deuxième fonction réseau et un ID de corrélation de notification éventuel.

10. Procédé (400) selon l'une quelconque des revendications 6 à 9, dans lequel :
- la deuxième fonction réseau (102, 202) et la troisième fonction réseau (103) sont respectivement un consommateur de service et un producteur de service pour un service spécifique.

11. Procédé (400) selon l'une quelconque des revendications 6 à 10, dans lequel :
- la troisième fonction réseau (103) appartient à un ou plusieurs ensembles de fonctions réseau ; dans lequel la première condition d'abonnement est que la troisième fonction réseau (103) est ajoutée ou supprimée d'un premier ensemble des un ou plusieurs ensembles de fonctions réseau ; et dans lequel la deuxième condition d'abonnement est que la troisième fonction réseau (103) est ajoutée ou supprimée d'un deuxième ensemble des un ou plusieurs ensembles de fonctions réseau.

12. Première fonction réseau (101, 600) mettant en œuvre une fonction de référentiel réseau, NRF, comprenant :
au moins un processeur (601) ; et
un support lisible par ordinateur non transitoire (602) couplé à l'au moins un processeur (601), le support lisible par ordinateur non transitoire (602) stocke des instructions exécutables par l'au moins un processeur (601), l'au moins un processeur (601) étant ainsi configuré pour réaliser le procédé (400) selon l'une quelconque des revendications 1 à 5.

13. Deuxième fonction réseau (102, 202, 700), comprenant :
au moins un processeur (701) ; et
un support lisible par ordinateur non transitoire (702) couplé à l'au moins un processeur (701), le support lisible par ordinateur non transitoire (702) stocke des instructions exécutables par l'au moins un processeur (701), l'au moins un processeur (701) étant ainsi configuré pour réaliser le procédé (500) selon l'une quelconque des revendications 6 à 11.

14. Support lisible par ordinateur (802) comprenant un code lisible par ordinateur qui, lorsqu'il est exécuté sur un appareil (101, 102, 202, 600, 700, 800), amène l'appareil (101, 102, 202, 600, 700, 800) à réaliser le procédé (400, 500) selon l'une quelconque des revendications 1 à 11.

15. Produit de programme informatique (804) comprenant un code lisible par ordinateur qui, lorsqu'il est exécuté sur un appareil (101, 102, 202, 600, 700, 800), amène l'appareil (101, 102, 202, 600, 700, 800) à réaliser le procédé (400, 500) selon l'une quelconque des revendications 1 à 11.
